# EUROPEAN PATENT SPECIFICATION

(11) **EP 2 772 752 B1**
(45) Date of publication and mention of the grant of the patent: **01.03.2017**
(21) Application number: 12844011.2
(22) Date of filing: 21.08.2012
(51) Int. Cl.: G01N 23/223, G01N 23/225

(54) **X-RAY SPECTROMETRY DETECTOR DEVICE**
DETEKTORVORRICHTUNG FÜR DIE RÖNTGENSPEKTROMETRIE
DISPOSITIF DÉTECTEUR DE SPECTROMÉTRIE À RAYONS X

(30) Priority: 28.10.2011 JP 2011237668
(43) Date of publication of application: 03.09.2014
(73) Proprietor: Hamamatsu Photonics K.K., Hamamatsu-shi, Shizuoka 435-8558 (JP)
(72) Inventor: SOEJIMA Hiroyoshi, Otokuni-gun Kyoto 618-0071 (JP)
(74) Representative: Grünecker Patent- und Rechtsanwälte PartG mbB
(86) International application number: PCT/JP2012/071064
(87) International publication number: WO 2013/061676

(56) References cited:
- EP-A1- 1 318 393
- JP-A- H1 151 883
- JP-A- S52 147 488
- JP-A- 2002 189 004
- JP-A- 2005 233 670
- JP-A- 2007 017 350
- JP-A- 2008 180 656
- JP-A- 2010 286 346
- JP-A- 2011 095 224
- YASUHARU NISHIDA ET AL.: 'X-sen CCD o Mochiiru Hacho Bunsangata Keiko X-sen Bunsekikei no Kaihatsu' X-SEN BUNSEKI TORONKAI KOEN YOSHISHU 17 November 2000, pages 67 - 68, XP008173553

## Description

### Technical Field

The present invention relates to an X-ray spectrometric detection device.

### Background Art

Patent Document 1 discloses a wavelength-dispersive X-ray analyzing device using a dispersive crystal. The dispersive crystal in this device has an inner side face formed by a series of circular arcs perpendicularly intersecting a reference plane including a predetermined reference line. The circular arcs of the inner side face reduce their curvature radius from a sample arranged on one end side of the reference line to an X-ray detector arranged on the other end side of the reference line. X-rays emitted from the sample are incident on the dispersive crystal, and only those having a wavelength corresponding to their incident angle are reflected so as to enter the X-ray detector.

Patent Document 2 discloses an X-ray energy detector. This X-ray energy detector includes an X-ray spectroscopic element (dispersive crystal) and a two-dimensional X-ray image detector. The energy of an X-ray spectrally resolved by the X-ray spectroscopic element is identified by the position where the X-ray is detected in the two-dimensional X-ray image detector. The detected image by the two-dimensional X-ray image detector is subjected to image processing, so as to obtain the X-ray intensity per energy.

Patent Document 3 discloses an X-ray spectroscopic device. This X-ray spectroscopic device includes a dispersive crystal and a position-sensitive X-ray detector. The dispersive crystal is arranged at a focal point of a virtual parabola and reflects X-rays emitted from a sample. The dispersive crystal is curved along the virtual parabola such that the reflected X-rays become parallel to each other. The position-sensitive X-ray detector extends in a direction perpendicular to the advancing direction of the parallel X-rays reflected by the dispersive crystal and detects the parallel X-rays.

Patent Document 4 discloses an X-ray analyzing device. This X-ray analyzing device irradiates a spectroscope with X-rays and detects those having a specific wavelength spectrally resolved by the spectroscope with a two-dimensional X-ray detector, so as to perform an X-ray analysis. The spectroscope has a dispersive crystal including a plurality of crystal planes having different plane distances and orientations in one crystal, and spectrally resolves the X-rays into a plurality of different wavelengths at the same time by the plurality of crystal planes. The plurality of spectrally resolved X-rays are detected by the two-dimensional detector at the same time.

Patent Document 5 discloses a non-scanning, wavelength-dispersive X-ray analyzing device. This device irradiates a sample with X-rays or an electron beam, and makes fluorescent X-rays or characteristic X-rays generated from the sample incident on a curvature distribution crystal (dispersive crystal). The curvature distribution crystal is controlled such that its crystal orientation is perpendicular to a given cylindrical surface, and its diffraction phenomenon is used for converging the X-rays at different positions for respective wavelengths. These X-rays are detected by a two-dimensional or one-dimensional X-ray detector, so as to measure an X-ray spectrum in a given wavelength range at once.

### Citation List

JP H11 51883A relates to a method and equipment for fluorescent x-ray analysis. JP 2002 189004 A relates to an x-ray analyzer.

### Patent Literature

Patent Document 1: Japanese Patent Application Laid-Open No. 2011-95224
Patent Document 2: Japanese Patent Application Laid-Open No. H7-318658
Patent Document 3: Japanese Patent Publication No. H7-95045
Patent Document 4: Japanese Patent Application Laid-Open No. 2000-65763
Patent Document 5: Japanese Patent Application Laid-Open No. 2008-180656

### Summary of Invention

### Technical Problem

X-ray spectrometry is roughly divided into two schemes. One is energy-dispersive type (Energy Dispersive X-ray spectroscopy; EDX), and the other is wavelength-dispersive type (Wavelength Dispersive X-ray spectrometry; WDX). In these schemes, the EDX is a technique which detects characteristic X-rays generated when a sample is irradiated with an electron beam or the like and analyzes constituent elements of the sample according to an energy distribution of the characteristic X-rays. The EDX is a simple scheme in that it can detect and analyze the whole energy region at once, but is unsuitable for trace element analyses and precise analyses since it is inferior to the WDX in terms of energy resolution and S/N ratio.

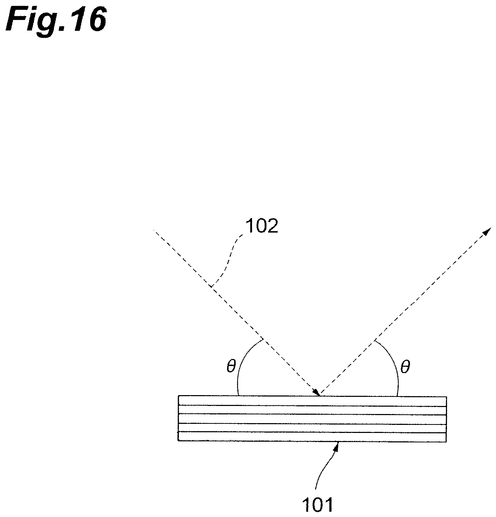

On the other hand, the WDX is a technique which spectrally resolves characteristic X-rays generated when a sample is irradiated with an electron beam or the like by wavelength and then detects the X-ray intensity of each wavelength, so as to analyze constituent elements of the sample. Here, Fig. 16 is a diagram illustrating a basic principle of the WDX. In the WDX, characteristic X-rays 102 are made incident on a dispersive crystal 101 in which atoms are arranged regularly. Here, diffraction occurs when a wavelength of the characteristic X-rays 102 and the complementary angle θ of the incident angle satisfy the Bragg reflection condition (nλ = 2dsin(90° - 0), where n is a positive integer, λ is the wavelength of X-rays, d is the crystal plane distance, and θ is the angle complementary to the incident angle). That is, one wavelength included in the characteristic X-rays is selectively reflected according to the magnitude of the angle θ. A general WDX changes the angle θ sequentially, so as to resolve the characteristic X-rays spectrally by wavelength and detect their intensities.

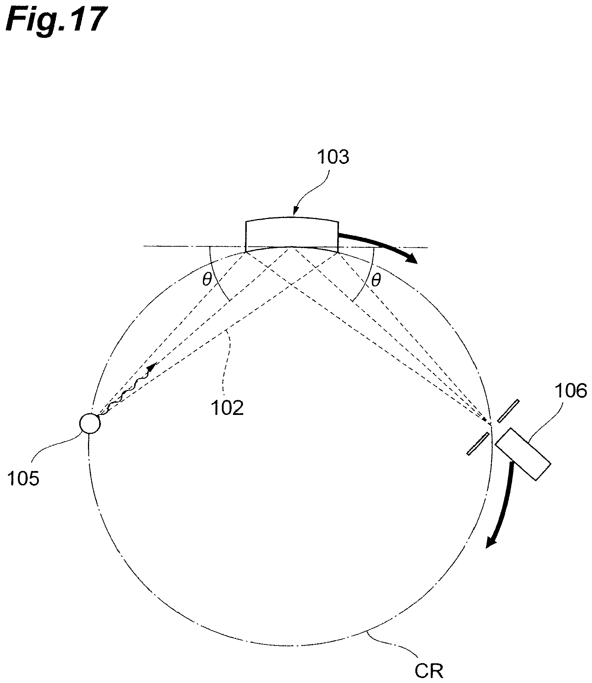

When spectrally resolving characteristic X-rays generated from a micro portion, a spectroscope such as the one illustrated in Fig. 17 is used in general. In this spectroscope, characteristic X-rays 102 generated from a micro portion 105 of a sample are incident on a curved dispersive crystal 103. Then, only one wavelength component corresponding to the complementary angle θ of the incident angle is spectrally resolved and reflected, so as to be detected by an X-ray detector 106. When changing the wavelength to be spectrally resolved in this spectroscope, the curved dispersive crystal 103 is displaced. At this time, it is necessary for the micro portion 105 serving as an X-ray generation source, the curved dispersive crystal 103, and the X-ray detector 106 to be always located on a Rowland circle CR.

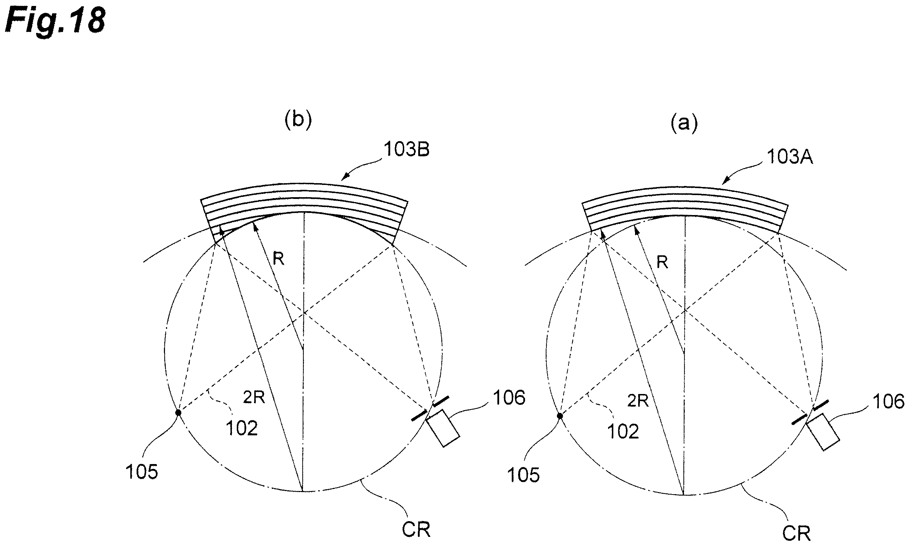

The curved dispersive crystal used in such a spectroscope includes the following two types, for example. (a) in Fig. 18 illustrates a curved dispersive crystal 103A known as Johann type. The radius of curvature (2R) of the crystal plane of this Johann type curved dispersive crystal 103A is two times the radius R of the Rowland circle CR. The same holds for the radius of curvature of the surface (X-ray entrance surface). In the Johann type curved dispersive crystal 103A, however, the surface deviates from the Rowland circle CR, so that its focus blurs a little, thereby making conversion and spectral resolution incomplete.

On the other hand, (b) in Fig. 18 illustrates a curved dispersive crystal 103B known as Johansson type. While the crystal plane of this Johansson type curved dispersive crystal 103B has a radius of curvature (2R) which is two times the radius R of the Rowland circle CR as in the Johann type, its surface (X-ray entrance surface) is polished so as to yield the same curvature as with the Rowland circle CR, unlike the Johann type. As a consequence, in the Johansson type curved dispersive crystal 103B, X-rays diffracted by the crystal surface can be focused more correctly on the X-ray detector 106 on the Rowland circle CR, whereby conversion and spectral resolution can be made more complete. However, advanced production technologies are required for making the Johansson type curved dispersive crystal 103B having a surface with such a curvature.

Further, when the curved dispersive crystal 103 is moved in order to change the complementary angle θ of the incident angle in the spectroscopes illustrated in Fig. 17 and Fig. 18, the emission angle of the characteristic X-rays incident on the curved dispersive crystal 103 varies in the micro portion 105. This changes the escape depth of the characteristic X-rays from the sample and influences of irregularities of the micro portion 105 in the sample. Therefore, so-called crystal rectilinear propagation type curved crystal spectroscopes may be used for more accurate conversion and spectral resolution. However, such spectroscopes require precision micromotion mechanisms for achieving complicated movements.

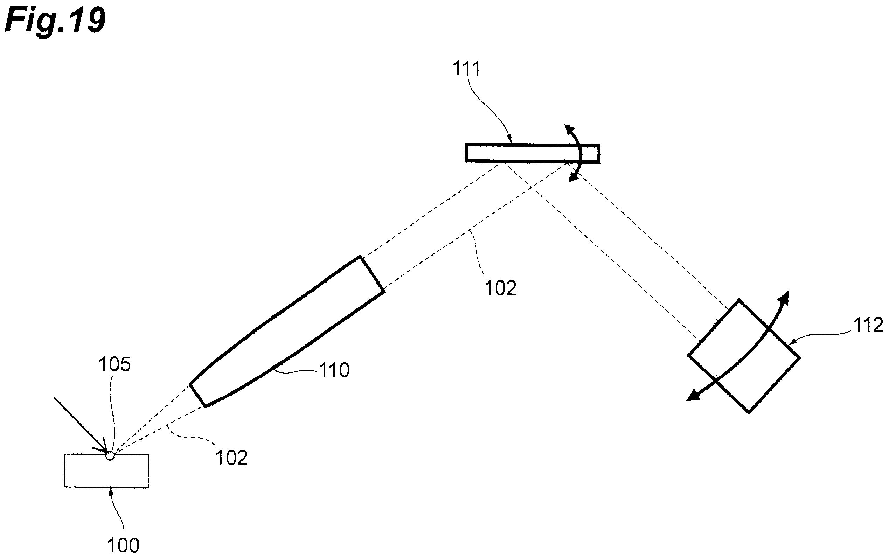

A spectroscope such as the one illustrated in Fig. 19, which differs from those depicted in Fig. 17 and Fig. 18, may be considered. The spectroscope illustrated in Fig. 19, which uses an X-ray lens such as MCX (Multi Capillary X-ray Lens, also known as polycapillary), is called MCX spectroscope. This spectroscope includes an MCX 110, a flat dispersive crystal 111, and an X-ray detector 112. The characteristic X-rays 102 generated when the micro portion 105 of the sample 100 is irradiated with an electron beam or the like become parallel while passing through the MCX 110, and reach the flat dispersive crystal 111. The characteristic X-rays 102 are reflected by the flat dispersive crystal 111, so as to be detected by the X-ray detector 112. By changing the angle of the flat dispersive crystal 111, the spectroscope can individually measure the respective intensities of wavelength components included in the characteristic X-rays 102.

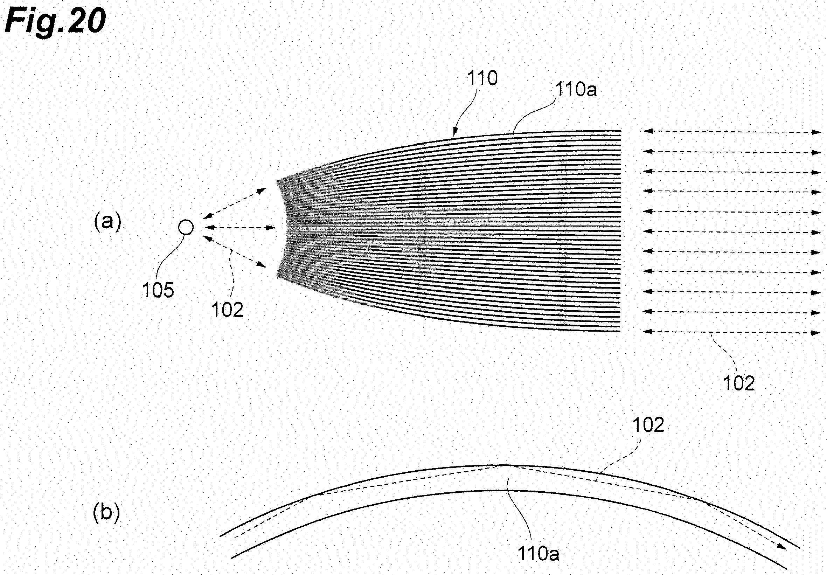

(a) in Fig. 20 is a sectional side view of the MCX 110. As (a) in Fig. 20 illustrates, the MCX 110 has a configuration in which a number of hollow tubes 110a each having a small inner diameter with a smooth inner face are bundled, while the hollow tubes 110a extend toward a given focal point (the micro portion 105 of the sample) on one end side, and parallel to each other on the other end side. As (b) in Fig. 20 illustrates, the characteristic X-rays 102 incident on one end of the hollow tubes 110a change their direction of propagation while advancing through the hollow tubes 110a. Then, these X-rays are emitted from the other end of the hollow tubes 110a as parallel X-rays.

The spectroscope illustrated in Fig. 19 and Fig. 20, which uses the flat plate dispersive crystal 111, can be constructed by a relatively simple mechanism (θ-2θ goniometer) and emit the characteristic X-rays from the sample with a fixed angle.

However, the spectroscope illustrated in Fig. 19 and Fig. 20 needs mechanisms for moving and angularly shifting the dispersive crystal and X-ray detector as with that depicted in Fig. 17 and Fig. 18, thereby complicating the device. Since the dispersive crystal and X-ray detector must be moved and change their angles at the time of spectrometry, a certain time is required for obtaining measurement results over all the wavelengths within a wavelength region to be measured. Therefore, it may take a long time to identify an unknown sample, which may be inconvenient depending on subjects to be analyzed.

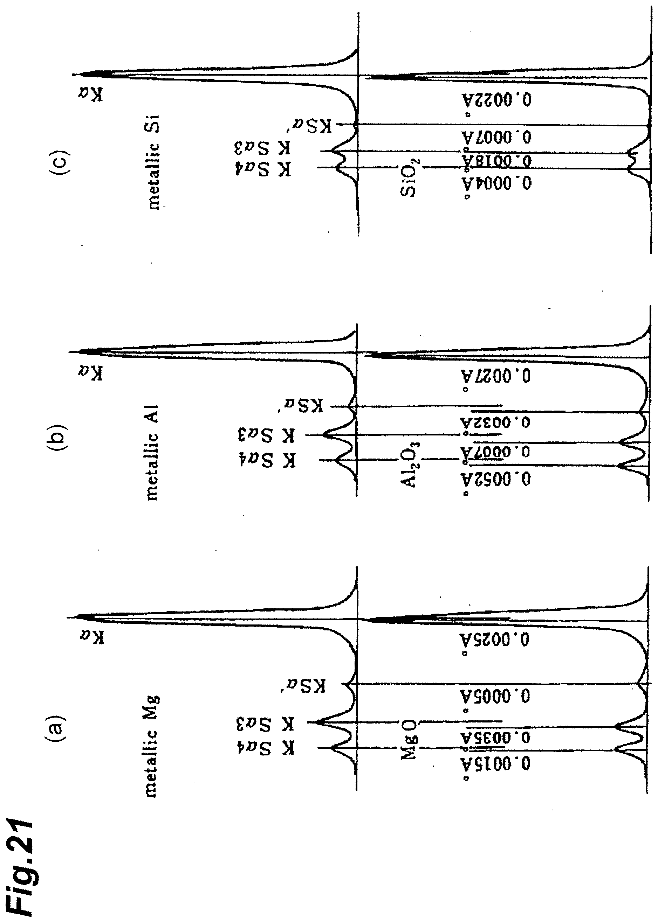

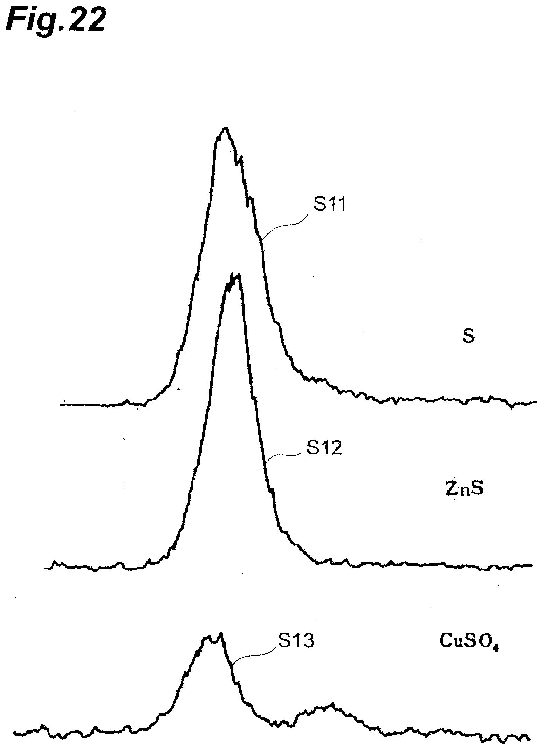

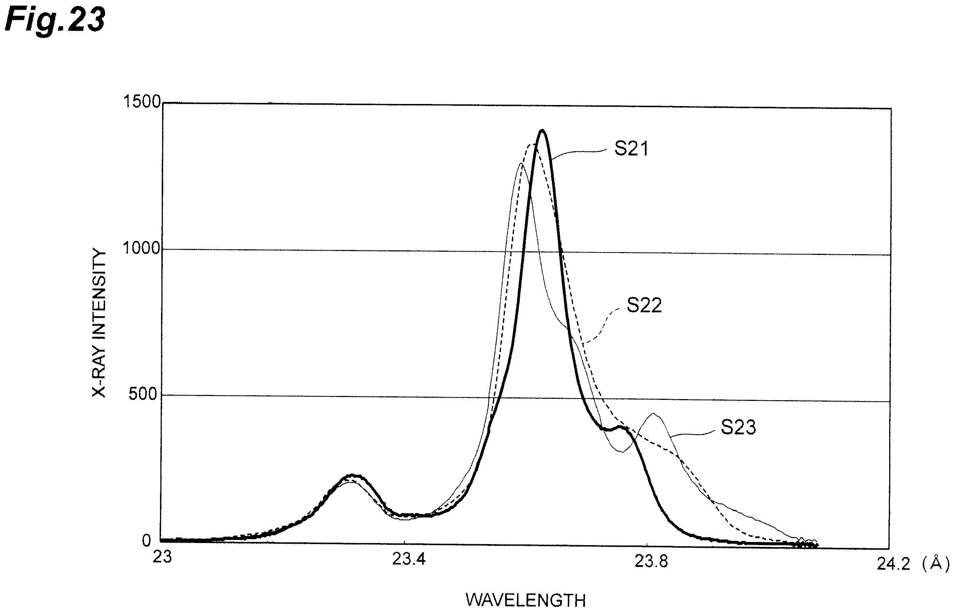

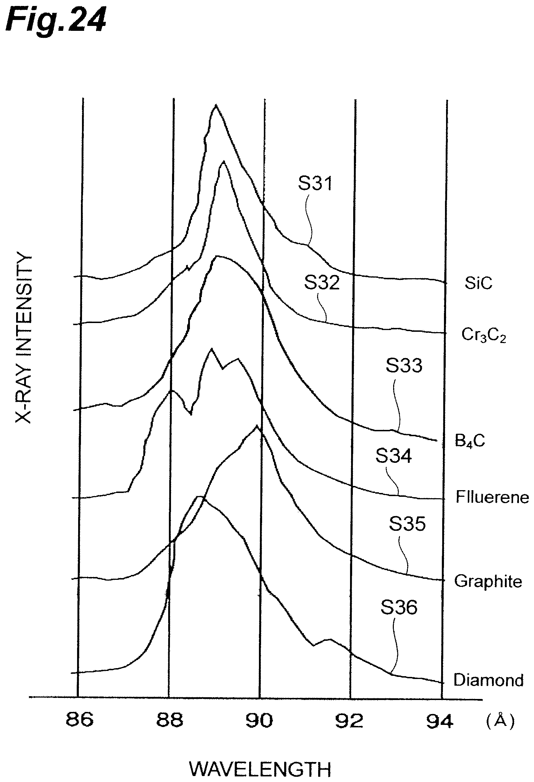

Examples of analyses using the WDX include state analyses in addition to qualitative and quantitative analyses. A state analysis analyzes the state of a sample element by utilizing the fact that a spectrum of characteristic X-rays changes subtly depending on the state of existence of the element. For example, Fig. 21 illustrates changes in states of spectra of Kα and Kα satellites in (a) magnesium, (b) aluminum, and (c) silicon, respectively. Fig. 22 illustrates changes in states of Kβ spectra of sulfur (S), in which a spectrum S11 represents state as sulfur (S), a spectrum S12 represents state as zinc sulfide (ZnS), and a spectrum S 13 represents state as copper sulfate (CuSO₄), respectively. Fig. 23 illustrates changes in states of K band spectra of oxygen (O), in which a spectrum S21 represents state as magnesium oxide (MgO), a spectrum S22 represents state as aluminum oxide (Al₂O₃), and a spectrum S23 represents state as silicon oxide (SiO₂), respectively. Fig. 24 illustrates changes in states of K band spectra of carbon (C), in which a spectrum S31 represents state as SiC, a spectrum S32 represents state as Cr₃C₂, a spectrum S33 represents state as B₄C, a spectrum S34 represents state as fullerene, a spectrum S35 represents state as graphite, and a spectrum S36 represents state as diamond, respectively. Fig. 21 to Fig. 23 are measured by a crystal rectilinear propagation type curved crystal spectroscope equipped with a Johansson type dispersive crystal, and Fig. 24 by one equipped with a Johann type pseudo-dispersive crystal.

It is necessary for state analyses such as those exemplified in Fig. 21 to Fig. 24 to measure detailed spectral forms of elements to be analyzed. For this purpose, however, a wavelength region including such a spectral form must be measured at very short wavelength intervals. It takes a long time for such measurement, whereby states of sample elements may change between the start and end of the measurement. Since a detailed spectral form cannot be seen until the measurement ends, empirical predictions and trials and errors are required for setting appropriate wavelength intervals, integrating time at each wavelength, and the like.

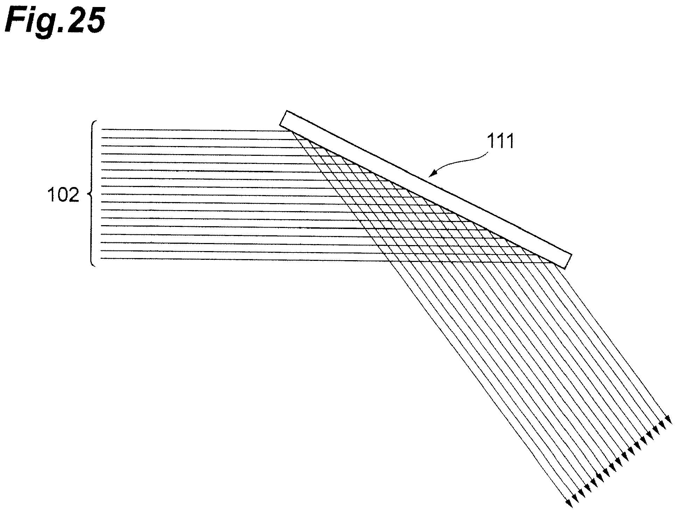

It is difficult for the spectroscope illustrated in Fig. 19 and Fig. 20 to turn the characteristic X-rays into completely parallel light by using the MCX 110. Fig. 25 is a diagram illustrating a state where completely parallel characteristic X-rays 102 are reflected by a flat dispersive crystal 111. When the characteristic X-rays 102 can be made completely parallel as Fig. 25 illustrates, they can be spectrally resolved into individual wavelength components correctly. (Such spectral resolution will hereinafter be referred to as "complete spectrometry." The complete spectrometry is spectrometry which is substantially free of measurement errors while having no distortion in spectral waveforms.) However, X-rays advance through each hollow tube 110a of the MCX 110 while having an inclination which, at maximum, corresponds to the total reflection critical angle with respect to the center axis of the hollow tube 110a and exit from the other end (exit end) while keeping this inclination. Hence, the X-rays exiting from the MCX 110 do not become parallel light in the strict sense, which makes it hard to achieve the complete spectral resolution.

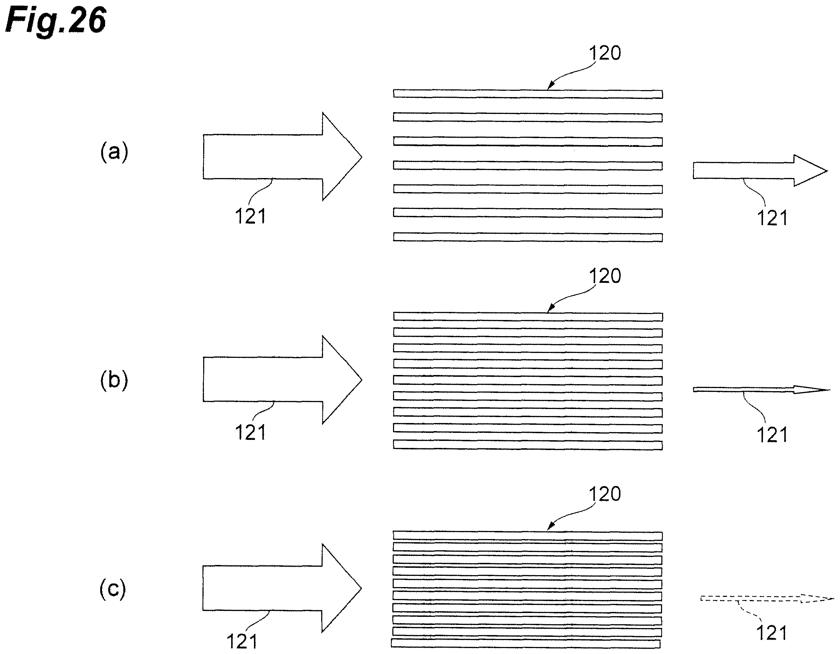

In general fluorescent X-ray analyses, since fluorescent X-rays generated from a sample spread, parallel components are taken out therefrom through a Soller slit and made incident on a flat dispersive crystal. (a) to (c) in Fig. 26 are diagrams for explaining the relationship between the plate interval of a Soller slit 120 and the intensity of fluorescent X-rays 121 exiting therefrom. As (a) in Fig. 26 illustrates, when the Soller slit 120 has wide plate intervals, the fluorescent X-rays 121 exiting therefrom have low parallelism. By contrast, as (b) and (c) in Fig. 26 illustrate, the narrower are the plate intervals of the Soller slit 120, the higher becomes the parallelism of the fluorescent X-rays 121 exiting therefrom. However, as the plate intervals of the Soller slit 120 are narrower, the intensity of the fluorescent X-rays 121 exiting therefrom becomes lower. For achieving the complete spectrometry, the plate intervals in the Soller slit 120 must be made as narrow as possible in order to raise the parallelism of the fluorescent X-rays 121 to the limit, which inevitably lowers the intensity of the fluorescent X-rays 121 without limit, whereby the complete spectrometry cannot be achieved in practice. This will also hold if a Soller slit is inserted between the MCX 110 and the flat plate dispersive crystal 111 in the MCX spectroscope illustrated in Fig. 19 and Fig. 20.

The present invention has been achieved in order to solve the above-described problem, and an object thereof is to provide an X-ray spectrometric detection device which can reduce the measurement time and attain complete spectrometry in a simple configuration.

### Solution to Problem

In order to achieve the above-mentioned object, an X-ray spectrometric detection device in accordance with the present invention is defined in claim 1.

In the X-ray spectrometric detection device, all wavelength components of characteristic X-rays emitted from a micro analysis spot are received by a flat diffractive reflection surface of a dispersive crystal, and a wavelength component corresponding to an incident angle for each position on the diffractive reflection surface is selectively diffracted and reflected, so as to be spectrally resolved. This can perform measurement while securing the dispersive crystal and two-dimensional X-ray detector as they are without moving or angularly shifting the dispersive crystal for changing the incident angle as in the conventional WDX devices. Therefore, respective intensities of wavelengths included in a desirable wavelength region can be acquired at the same time, so as to compute a characteristic X-ray spectrum, whereby the measurement time can be reduced greatly.

As mentioned above, the X-ray spectrometric detection device can perform measurement while securing the dispersive crystal and two-dimensional X-ray detector as they are without moving or angularly shifting the dispersive crystal for changing the incident angle. This requires no complicated devices for moving and angularly shifting the dispersive crystal, whereby a characteristic X-ray spectrum can be obtained by a simple configuration.

In the X-ray spectrometric detection device, the micro analysis spot on the sample surface is very small, i.e., it has a diameter of 100 µm or less. Therefore, when a specific wavelength component is diffracted and reflected at a given position on the diffractive reflection surface of the dispersive crystal, the incident angle of characteristic X-rays incident on this position fluctuates very little. Hence, only a wavelength component corresponding to the incident angle at each position can be selectively diffracted and reflected with a very high accuracy, whereby the characteristic X-rays can be spectrally resolved into individual wavelength components strictly (at a high resolution). That is, the X-ray spectrometric detection device can attain the complete spectrometry.

In the conventional devices (of Johann type, Johansson type, etc.) using a curved dispersive crystal, the fact that the curved diffractive reflection surface of the dispersive crystal is hard to form with a high accuracy also causes fluctuations in the incident angle. By contrast, the X-ray spectrometric detection device has a flat diffractive reflection surface. The flat diffractive reflection surface is easy to process and can be formed flat with a high accuracy. This can eliminate fluctuations in incident angle of the characteristic X-rays incident at each position on the diffractive reflection surface and achieve the complete spectrometry.

Further advantageous embodiments are defined in the dependent claims.

### Advantageous Effects of Invention

The X-ray spectrometric detection device in accordance with the present invention can reduce the measurement time and attain complete incident at each position on the diffractive reflection surface and achieve the complete spectrometry.

A second X-ray spectrometric detection device in accordance with the present invention is an X-ray spectrometric detection device for spectrally resolving characteristic X-rays emitted from a micro analysis spot having a diameter of 10 µm or less on a sample surface irradiated with X-rays or an electron beam and detecting the resolved characteristic X-rays by wavelength, the device comprising a dispersive crystal having a flat diffractive reflection surface for receiving the characteristic X-rays emitted from the micro analysis spot, and being adapted to diffract and reflect a wavelength component corresponding to an incident angle to the diffractive reflection surface in wavelength components included in the characteristic X-ray, so as to spectrally resolve the characteristic X-rays by wavelength; and a two-dimensional X-ray detector having a light-receiving surface for receiving the characteristic X-rays diffracted and reflected by the dispersive crystal, and being adapted to generate data concerning an incident position and intensity of the characteristic X-rays incident on the light-receiving surface.

In the second X-ray spectrometric detection device, as in the first X-ray spectrometric detection device, all wavelength components of characteristic X-rays emitted from a micro analysis spot are received by a flat diffractive reflection surface of a dispersive crystal, and a wavelength component corresponding to an incident angle for each position on the diffractive reflection surface is selectively diffracted and reflected, so as to be spectrally resolved. This makes it unnecessary to move and angularly shift the dispersive crystal for changing the incident angle as in the conventional WDX devices, whereby the measurement time can be reduced greatly. Further, no complicated devices for moving and angularly shifting the dispersive crystal are necessary, whereby a characteristic X-ray spectrum can be obtained by a simple configuration.

In the second X-ray spectrometric detection device, the micro analysis spot on the sample surface is very small, i.e., it has a diameter of 10 µm or less. Therefore, when a specific wavelength component is diffracted and reflected at a given position on the diffractive reflection surface of the dispersive crystal, the incident angle of characteristic X-rays incident on this position fluctuates very little. Hence, only a wavelength component corresponding to the incident angle at each position can be selectively diffracted and reflected with a very high accuracy, whereby the characteristic X-rays can be spectrally resolved into individual wavelength components strictly (at a high resolution). That is, the second X-ray spectrometric detection device can attain the complete spectrometry.

The second X-ray spectrometric detection device has a flat diffractive reflection surface and thus can eliminate fluctuations in incident angle of the characteristic X-rays incident at each position on the diffractive reflection surface, so as to achieve the complete spectrometry.

### Advantageous Effects of Invention

The X-ray spectrometric detection device in accordance with the present invention can reduce the measurement time and attain complete spectrometry in a simple configuration.

### Brief Description of Drawings

Fig. 1 is a diagram illustrating a configuration of the X-ray spectrometric detection device not in accordance with the present invention.
Fig. 2 is a diagram illustrating a more preferred configuration of the X-ray spectrometric detection device in accordance with an embodiment of the present invention.
Fig. 3 is a diagram illustrating an example of a configuration of a two-dimensional X-ray detector.
Fig. 4 includes (a) a diagram illustrating an example of image data represented by two-dimensional data, and (b) a diagram schematically illustrating finely-divided image data composed of M × N fine pixels formed by dividing each of M pixels in the two-dimensional data into N.
Fig. 5 is a plan view illustrating a micro analysis spot, a dispersive crystal, and characteristic X-rays as seen in a direction normal to a diffractive reflection surface of the dispersive crystal.
Fig. 6 is a front view illustrating the dispersive crystal, a two-dimensional X-ray detector, and the characteristic X-rays as seen in a direction parallel to the diffractive reflection surface.
Fig. 7 is a diagram schematically illustrating the finely-divided image data.
Fig. 8 is a graph illustrating a characteristic X-ray spectrum of stainless steel (SUS) measured by a conventional WDX (Johansson type curved dispersive crystal spectroscope).
Fig. 9 is a diagram illustrating finely-divided image data obtained by the X-ray spectrometric detection device and a characteristic X-ray spectrum obtained by integrating the finely-divided image data for each of a plurality of regions concerning the same stainless steel as with Fig. 8.
Fig. 10 is a diagram illustrating the finely-divided image data obtained by the X-ray spectrometric detection device and the characteristic X-ray spectrum obtained by integrating the finely-divided image data for each of a plurality of regions concerning the same stainless steel as with Fig. 8.
Fig. 11 is a graph illustrating a characteristic X-ray spectrum of pure copper (Cu) measured by the conventional WDX (Johansson type curved dispersive crystal spectroscope).
Fig. 12 is a diagram illustrating finely-divided image data obtained by the X-ray spectrometric detection device and a characteristic X-ray spectrum obtained by integrating the finely-divided image data for each of a plurality of regions concerning the same pure copper as with Fig. 11.
Fig. 13 is a diagram illustrating finely-divided image data concerning Cu when the micro analysis spot has a diameter of 10 µm.
Fig. 14 is a diagram illustrating a state where a characteristic X-ray spectral waveform of Cu calculated by integrating the finely-divided image data shown in Fig. 13 is superimposed on the finely-divided image data.
Fig. 15 includes diagrams illustrating a principle by which the maximum value θmax and the minimum value θmin of the complementary angle θ of the incident angle are restricted.
Fig. 16 is a diagram illustrating a basic principle of the WDX.
Fig. 17 is a diagram illustrating a spectroscope generally used for spectrally resolving a characteristic X-ray generated from a micro portion in the WDX.
Fig. 18 includes (a) a diagram illustrating a curved dispersive crystal known as Johann type, and (b) a diagram illustrating a curved dispersive crystal known as Johansson type.
Fig. 19 is a diagram illustrating a spectroscope using an X-ray lens such as MCX (Multi Capillary X-ray Lens).
Fig. 20 is a sectional side view of the MCX.
Fig. 21 illustrates changes in states of spectra of 2α and Kα satellites in (a) magnesium, (b) aluminum, and (c) silicon.
Fig. 22 illustrates changes in states of Kβ spectra of sulfur (S).
Fig. 23 illustrates changes in states of K band spectra of oxygen (O).
Fig. 24 illustrates changes in states of K band spectra of carbon (C).
Fig. 25 is a diagram illustrating a state where completely parallel characteristic X-rays are reflected by a flat dispersive crystal.
Fig. 26 includes diagrams for explaining the relationship between the plate interval in a Soller slit and the intensity of fluorescent X-rays exiting therefrom.

### Description of Embodiments

In the following, an embodiment of the X-ray spectrometric detection device according to the present invention will be described in detail with reference to the drawings. In the explanation of the drawings, the same components will be referred to with the same reference symbols, and overlapping descriptions will be omitted.

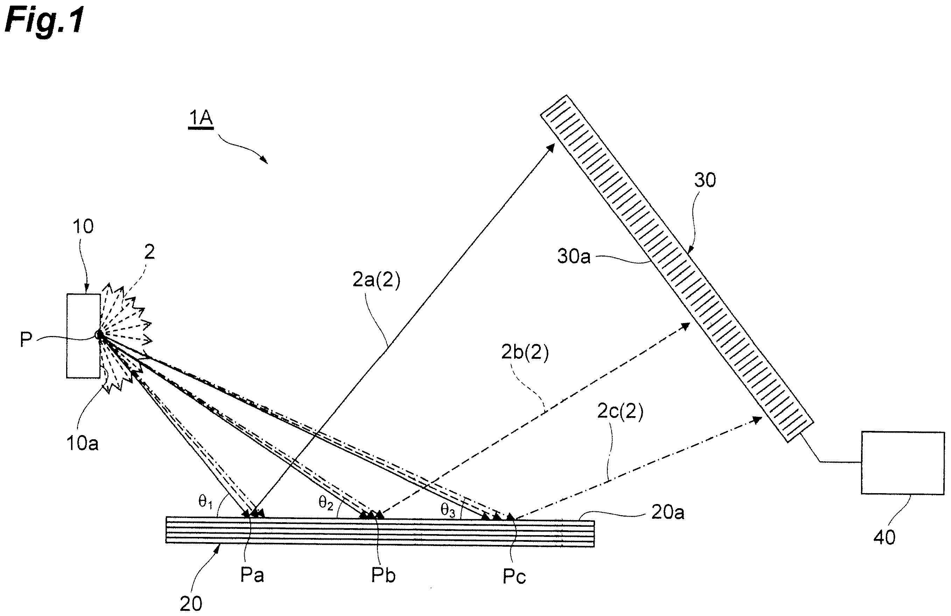

Fig. 1 is a diagram illustrating a configuration of the X-ray spectrometric detection device not in accordance with the present invention. The X-ray spectrometric detection device 1A is a device which irradiates a surface 10a of a sample 10 with X-rays or an electron beam, spectrally resolves characteristic X-rays 2 emitted from a micro analysis spot P of the surface 10a, and detects the resolved characteristic X-rays by wavelength. When the sample 10 is carbon or the like, so that the characteristic X-rays 2 fall under the soft X-ray region, for example, the size (diameter) of the micro analysis spot P is 100 µm or less, more preferably 50 µm or less. When the sample 10 is copper or the like, so that the characteristic X-rays 2 fall under a shorter wavelength region than the soft X-ray region, for example, the size (diameter) of the micro analysis spot P is preferably 10 µm or less. Such a size of the micro analysis spot P can be obtained by controlling the diameter of the X-rays or the electron beam irradiating the surface 10a of the sample 10, for example.

As Fig. 1 illustrates, the X-ray spectrometric detection device 1A includes a dispersive crystal 20, a two-dimensional X-ray detector 30, and an arithmetic processing unit 40. The dispersive crystal 20, which is a flat plate dispersive crystal, has a diffractive reflection surface 20a contributing to diffracting and reflecting the characteristic X-rays. The diffractive reflection surface 20a has very high flatness and receives a part of the characteristic X-rays 2 emitted from the micro analysis spot P of the sample 10. The dispersive crystal 20 is constructed so as to contain at least one material selected from the group consisting of LiF, PET, ADP, RAP, TAP, and PbST, for example. When the characteristic X-rays 2 are included in the soft X-ray region, in particular, the dispersive crystal 20 is constructed so as to contain at least one material selected from the group consisting of PET, ADP, RAP, TAP, and PbST.

By diffracting and reflecting wavelength components corresponding to respective incident angles to the diffractive reflection surface 20a in wavelength components included in the characteristic X-rays 2, the dispersive crystal 20 spectrally resolves the characteristic X-rays 2 by wavelength. Fig. 1 illustrates three wavelength components 2a to 2c included in the characteristic X-rays 2 emitted from the micro analysis spot P. The wavelength components 2a to 2c have wavelengths different from each other and are substantially isotropically emitted from the micro analysis spot P. When the characteristic X-rays 2 are emitted from the micro analysis spot P, the wavelength components 2a to 2c are incident on all the positions on the diffractive reflection surface 20a. Then, on the diffractive reflection surface 20a, at a position (position Pa in the drawing) where the complementary angle θ₁ of the incident angle and the wavelength of the wavelength component 2a satisfy the Bragg reflection condition, only the wavelength component 2a is diffracted so as to be selectively reflected. Similarly, only the wavelength component 2b is selectively reflected at a position (position Pb in the drawing) where the complementary angle θ₂ of the incident angle and the wavelength of the wavelength component 2b satisfy the Bragg reflection condition, and only the wavelength component 2c is selectively reflected at a position (position Pc in the drawing) where the complementary angle θ₃ of the incident angle and the wavelength of the wavelength component 2c satisfy the Bragg reflection condition. While three wavelength components 2a to 2c are exemplified here, the same holds for the other wavelength components included in the characteristic X-rays. Since the wavelength components are thus diffracted at their respective positions different from each other, the individual wavelength components included in the characteristic X-rays 2 are spectrally resolved.

The micro analysis spot P has a very small size (100 µm or less), whereby the incident angle of the characteristic X-rays 2 to one position on the diffractive reflection surface 20a fluctuates very little. Therefore, at each position on the diffractive reflection surface 20a, a wavelength component corresponding to the complementary angle θ of the incident angle at the position is spectrally resolved very accurately without substantial fluctuations. That is, this embodiment completely resolves the characteristic X-rays 2.

When the sample 10 is carbon or the like, for example, so that the characteristic X-rays 2 are included in the soft X-ray region, the lattice spacing of the dispersive crystal 20 is preferably greater than 4 Å, more preferably greater than 50 Å. This makes it possible to spectrally resolve the characteristic X-rays 2 in the soft X-ray region favorably. When the sample 10 is copper or the like, for example, so that the characteristic X-rays 2 are included in a shorter wavelength region than the soft X-ray region, the lattice spacing of the dispersive crystal 20 is preferably greater than 2 Å.

The two-dimensional X-ray detector 30 is arranged on the same side with the micro analysis spot P of the sample 10 as seen from the diffractive reflection surface 20a of the dispersive crystal 20. The two-dimensional X-ray detector 30 has a light-receiving surface 30a for receiving the characteristic X-rays 2 diffracted and reflected by the diffractive reflection surface 20a and generates two-dimensional data concerning the incident position and intensity of the characteristic X-rays 2 incident on the light-receiving surface 30a by so-called single photon counting.

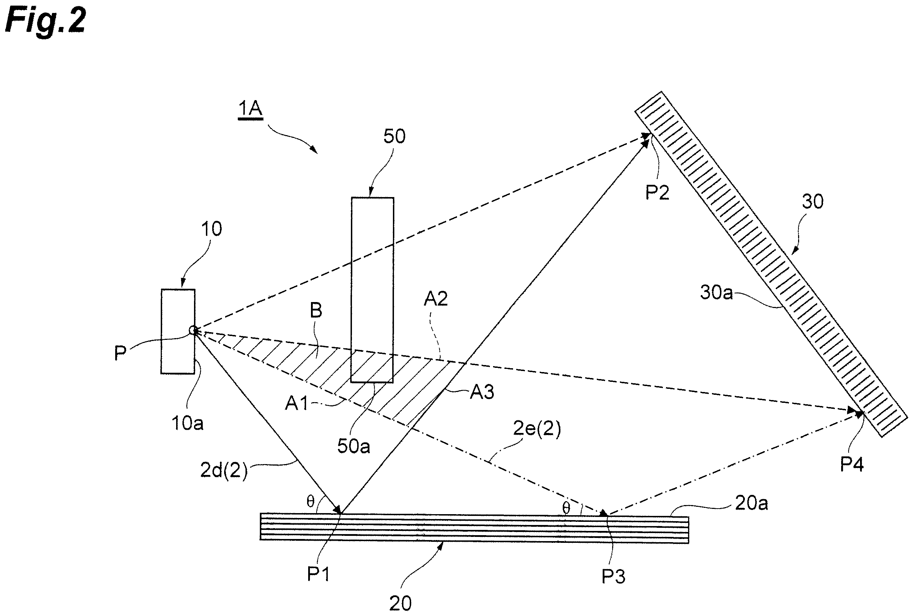

Here, Fig. 2 is a diagram illustrating a configuration of the X-ray spectrometric detection device 1A in accordance with the present invention. The X-ray spectrometric detection device 1A illustrated in Fig. 2 further comprises a shield member 50 in addition to the configuration depicted in Fig. 1. The shield member 50, which is a plate-shaped member containing a material adapted to block X-rays, is arranged between the micro analysis spot P and the light-receiving surface 30a of the two-dimensional X-ray detector 30. The shield member 50 blocks the characteristic X-rays 2 from reaching the light-receiving surface 30a directly from the micro analysis spot P.

The arrangement of the shield member 50 will now be explained more specifically. Let a first position P1 be a position where a characteristic X-ray 2d having the smallest incident angle (i.e., the largest complementary angle θ of the incident angle) to the diffractive reflection surface 20a, in the characteristic X-rays 2 reaching the light-receiving surface 30a of the two-dimensional X-ray detector 30 by way of the diffractive reflection surface 20a of the dispersive crystal 20 from the micro analysis spot P, is diffracted and reflected on the diffractive reflection surface 20a. Let a second position P2 be a position where the characteristic X-ray 2d diffracted and reflected at the first position P1 reaches the light-receiving surface 30a. Let a third position P3 be a position where a characteristic X-ray 2e having the largest incident angle (i.e., the smallest complementary angle θ of the incident angle) to the diffractive reflection surface 20a is diffracted and reflected on the diffractive reflection surface 20a. Let a fourth position P4 be a position where the characteristic X-ray 2e diffracted and reflected at the third position P3 reaches the light-receiving surface 30a. In this case, it is preferred for an end edge 50a on the dispersive crystal 20 side of the shield member 50 to be located within a space B (hatched in the drawing) defined by a first boundary A1 passing the micro analysis spot P and the third position P3, a second boundary A2 passing the micro analysis spot P and the fourth position P4, and a third boundary A3 passing the first position P1 and the second position P2. Arranging the end edge 50a of the shield member 50 within such a region can favorably let the characteristic X-rays 2 diffracted and reflected by the diffractive reflection surface 20a reach the light-receiving surface 30a and effectively block the characteristic X-rays 2 from reaching the light-receiving surface 30a directly from the micro analysis spot P. This can improve the S/N ratio in the two-dimensional X-ray detector 30.

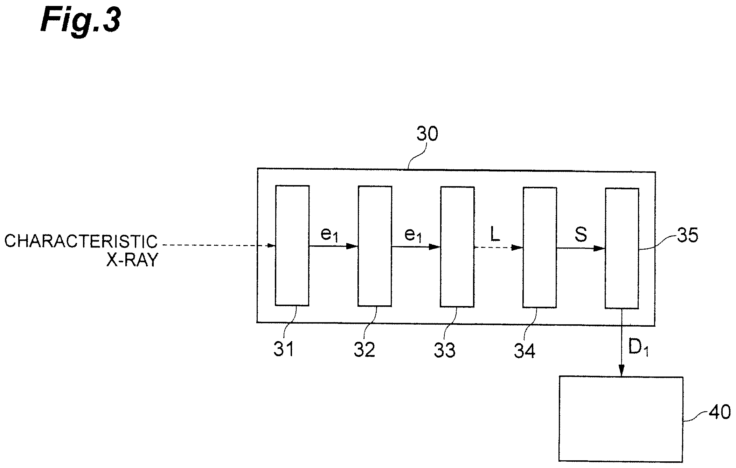

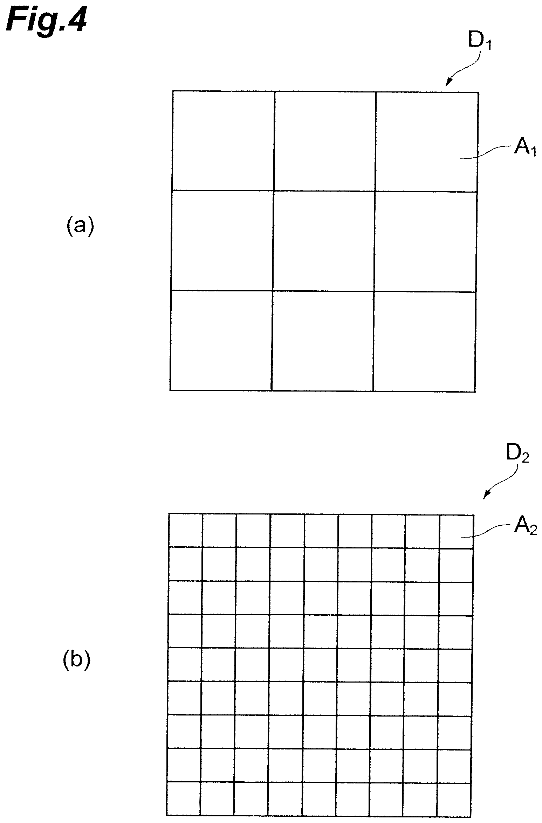

Fig. 3 is a diagram illustrating an example of a configuration of the two-dimensional X-ray detector 30. As this drawing illustrates, the two-dimensional X-ray detector 30 has a photoelectric conversion unit 31, an electron multiplier unit 32, a fluorescent screen 33, a photodetector unit 34, and an arithmetic unit 35. The photoelectric conversion unit 31 converts the characteristic X-ray 2 arriving from the diffractive reflection surface 20a into an electron e₁ and emits the electron e₁ to the electron multiplier unit 32. While keeping the two-dimensional position of the electron e₁ generated by the photoelectric conversion unit 31, the electron multiplier unit 32 subjects the electron e₁ to secondary electron multiplication and emits thus multiplied electrons e₂ to the fluorescent screen 33. While keeping the two-dimensional position of the electrons e₂ emitted from the electron multiplier unit 32, the fluorescent screen 33 converts the electrons e₂ into light L and emits the light L to the photodetector unit 34. The photodetector unit 34, which is constructed so as to include an image pickup device such as a CCD camera having two-dimensionally arranged M pixels (where M is an integer of 4 or more), detects the light L emitted from the fluorescent screen 33 and converts it into an electric signal S pixel by pixel. The photodetector unit 34 outputs the electric signal S of each pixel to the arithmetic unit 35. The arithmetic unit 35 counts the number of detections of the light L in the photodetector unit 34 per pixel and generates two-dimensional data D₁ according to the number of detections per pixel. Then, the arithmetic unit 35 outputs thus generated two-dimensional data D₁ to the arithmetic processing unit 40. (a) in Fig. 4 is a diagram illustrating an example of image data represented by the two-dimensional data D₁; for simplifying the explanation, this two-dimensional data D₁ has 3 × 3, i.e., M=9, pixels A₁ which are two-dimensionally arranged in a plurality of columns and a plurality of rows, while the pixels A₁ are assigned with respective data values corresponding to their numbers of detections of the light L.

The arithmetic processing unit 40 generates finely-divided image data D₂ concerning the characteristic X-rays 2 based on the two-dimensional data D₁ and computes information including a spectrum of the characteristic X-rays 2 from the finely-divided image data D₂. The arithmetic processing unit 40 may favorably be configured by an arithmetic device such as a computer having a CPU and a memory, for example. As (b) in Fig. 4 illustrates, the finely-divided image data D₂ is constituted by M × N fine pixels A₂ formed by dividing each of the M pixels A₁ in the two-dimensional data D₁ into N (where N is an integer of 2 or more). (b) in Fig. 4, which illustrates a case where the pixel A₁ is divided into 3 × 3 = 9 (i.e., N = 9) fine pixels A₂ by way of example, represents the finely-divided image data D₂ divided into M × N, i.e., 9 × 9 = 81, fine pixels A₂ on the same scale as with (a) in Fig. 4. When calculating the data value of each fine pixel A₂ in the finely-divided image data D₂, the arithmetic processing unit 40 imparts a gradient to the data values of the N fine pixels A₂ included in the pixel A₁ (subject pixel) containing the fine pixel A₂ to be calculated according to the numbers of detections of the light L in the pixels A₁ adjacent to the surroundings of the subject pixel A₁. According to such finely-divided image data D₂, the arithmetic processing unit 40 computes information including a spectrum of the characteristic X-rays 2.

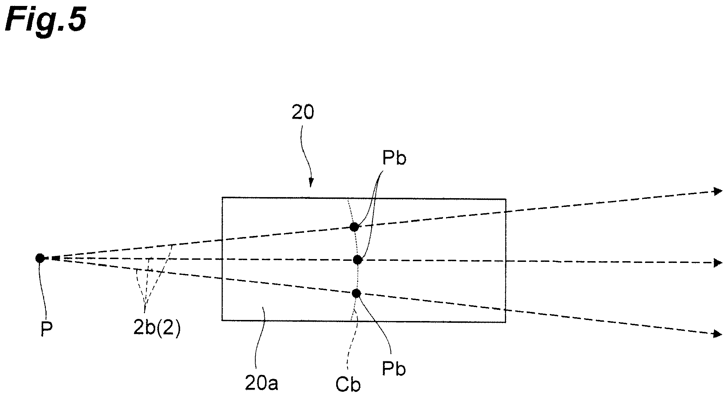

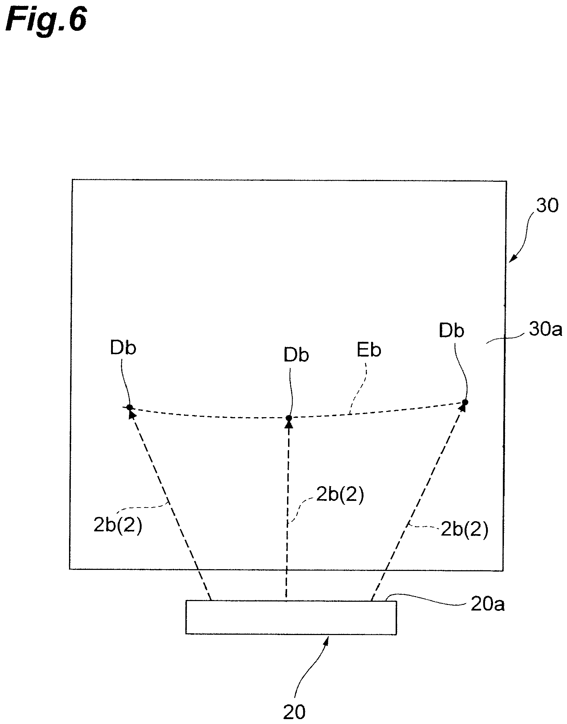

A scheme for computing spectral information of the characteristic X-rays 2 in the arithmetic processing unit 40 will now be explained. Fig. 5 is a plan view illustrating the micro analysis spot P, dispersive crystal 20, and characteristic X-rays 2 as seen in a direction normal to the diffractive reflection surface 20a of the dispersive crystal 20. Fig. 6 is a front view illustrating the dispersive crystal 20, two-dimensional X-ray detector 30, and characteristic X-rays 2 as seen in a direction parallel to the diffractive reflection surface 20a. As mentioned above, this embodiment measures the characteristic X-rays 2 emitted from the very small micro analysis spot P. Therefore, an assembly of points yielding the same incident angle to the diffractive reflection surface 20a, i.e., an assembly of points diffracting and reflecting a given wavelength component, does not look like a straight line but a curved line, whose examples include circular arcs, elliptical arcs, and quadratic curves. By way of example, Fig. 5 illustrates positions Pb where the wavelength component 2b depicted in Fig. 1 is diffracted and reflected at the complementary angle θ₂ of the incident angle and their assembly Cb. The assembly Cb looks like a curved line whose examples include circular arcs, elliptical arcs, and quadratic curves.

Therefore, an assembly of incident points of the same wavelength components on the light-receiving surface 30a of the two-dimensional X-ray detector 30 is also not a straight line but a curved line whose examples include circular arcs, elliptical arcs, and quadratic curves. By way of example, Fig. 6 illustrates incident points Db where the wavelength component 2b depicted in Fig. 5 is incident on the light-receiving surface 30a and their assembly Eb. The assembly Eb looks like a curved line whose examples include circular arcs, elliptical arcs, and quadratic curves.

Thus, a region where a given wavelength component is incident on the light-receiving surface 30a of the two-dimensional X-ray detector 30 becomes a curved-line-shaped region. Therefore, this embodiment integrates data in such a curved region, so as to determine the intensity of the wavelength component.

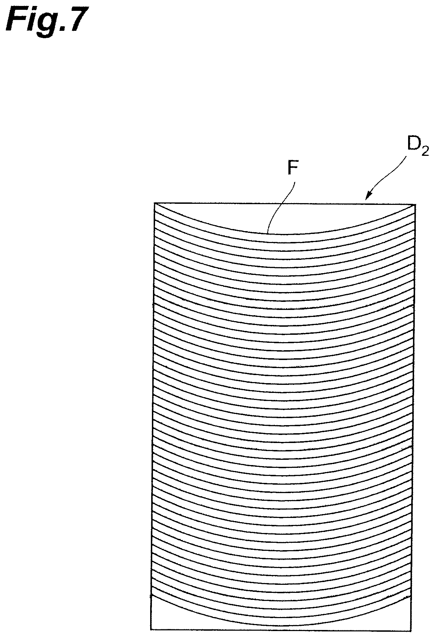

Fig. 7 is a diagram schematically illustrating the finely-divided image data D₂, in which the finely-divided image data D₂ is divided into a plurality of regions F aligning in a predetermined direction (the longitudinal direction of the finely-divided image data D₂ in the drawing). The plurality of regions F are curved-line-shaped regions, whose examples include circular-arc-shaped regions, elliptical-arc-shaped regions, and quadratic-curve-shaped regions, and the respective regions F correspond to the respective wavelength components included in the characteristic X-rays. The arithmetic processing unit 40 performs integration for each region F of the finely-divided image data D₂, so as to determine the intensity of the wavelength component corresponding to each region F, thereby producing spectral information. The predetermined direction herein is a direction along a line where a plane including the micro analysis spot P, the center of the diffractive reflection surface 20a, and the center of the light-receiving surface 30a intersects the light-receiving surface 30a.

When integrating data for each region F, the arithmetic processing unit 40 preferably performs integration while multiplying the data by a weight corresponding to a detection position within the region F. The detection position herein is a position within the region F in a direction intersecting the predetermined direction mentioned above. The data acquired within the region F do not always represent wavelengths of characteristic X-rays at the same accuracy, but the accuracy of data may be lower at a position near an end part of the region F than at a position near a center part of the region F, for example. In such a case, the data may be weighted heavier at the position near the center part of the region F and lighter at the position near the end part of the region F and integrated.

Operational effects obtained by the X-ray spectrometric detection device 1A constructed as in the foregoing will now be explained. In the X-ray spectrometric detection device 1A, all the wavelength components of characteristic X-rays emitted from the micro analysis spot P are received by the flat dispersive crystal 20, and the wavelength components corresponding to respective incident angles at positions on the dispersive crystal 20 are selectively diffracted and reflected, so as to be spectrally resolved. This makes it possible to perform measurement while securing the dispersive crystal 20 and two-dimensional X-ray detector 30 as they are without moving or angularly shifting the dispersive crystal for changing the incident angle as in the conventional WDX devices. Therefore, respective intensities of wavelengths included in a desirable wavelength region can be acquired at the same time, so as to compute a characteristic X-ray spectrum, whereby the measurement time can be reduced greatly.

As mentioned above, the X-ray spectrometric detection device 1A of this embodiment can perform measurement while securing the dispersive crystal 20 and two-dimensional X-ray detector 30 as they are without moving or angularly shifting the dispersive crystal for changing the incident angle. This requires no complicated devices for moving and angularly shifting the dispersive crystal, whereby a characteristic X-ray spectrum can be obtained by a simple configuration.

In the X-ray spectrometric detection device 1A of this embodiment, the micro analysis spot P on the surface of the sample 10 is very small, i.e., it has a diameter of 100 µm or less (preferably 50 µm or less, more preferably 10 µm or less). Therefore, when a specific wavelength component is diffracted and reflected at a given position on the diffractive reflection surface 20a of the dispersive crystal 20, the incident angle of characteristic X-rays incident on the position fluctuates very little. Hence, only a wavelength component corresponding to the incident angle at each position can be selectively diffracted and reflected with a very high accuracy, whereby the characteristic X-rays 2 can be spectrally resolved into individual wavelength components strictly (at a high resolution). That is, the X-ray spectrometric detection device 1A of this embodiment can attain the complete spectrometry.

In the conventional devices (of Johann type, Johansson type, etc.) using a curved dispersive crystal, the fact that the curved diffractive reflection surface of the dispersive crystal is hard to form with a high accuracy also causes fluctuations in the incident angle. By contrast, the X-ray spectrometric detection device 1A of this embodiment uses the flat-plate-shaped dispersive crystal 20. The flat dispersive crystal is easy to process, whereby the diffractive reflection surface 20a can be formed flat with a high accuracy. This can eliminate fluctuations in incident angle of the characteristic X-rays incident at each position on the diffractive reflection surface 20a and achieve the complete spectrometry.

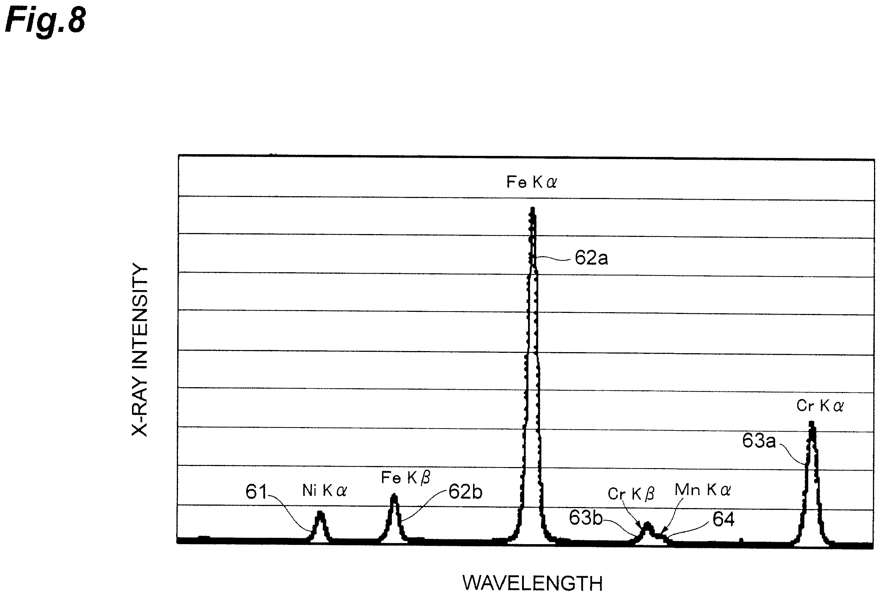

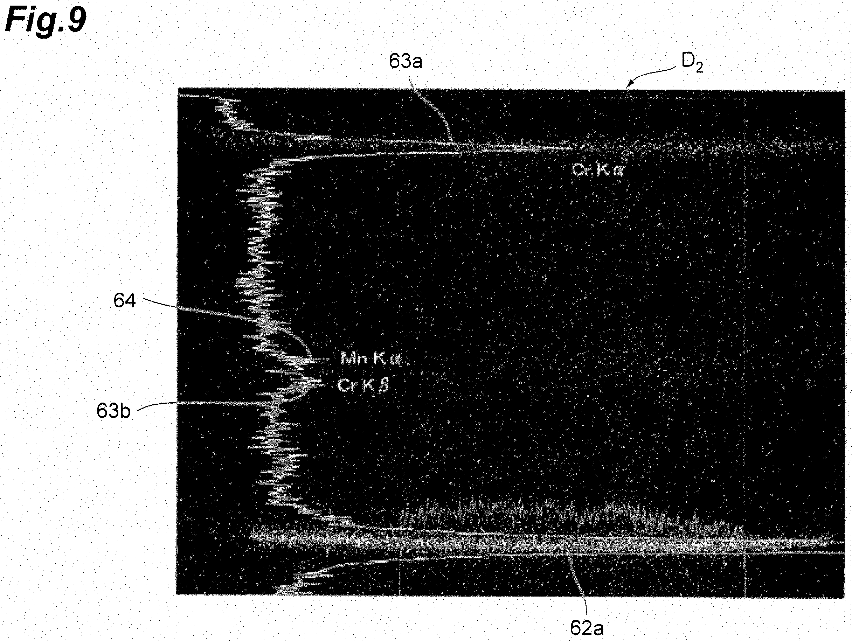

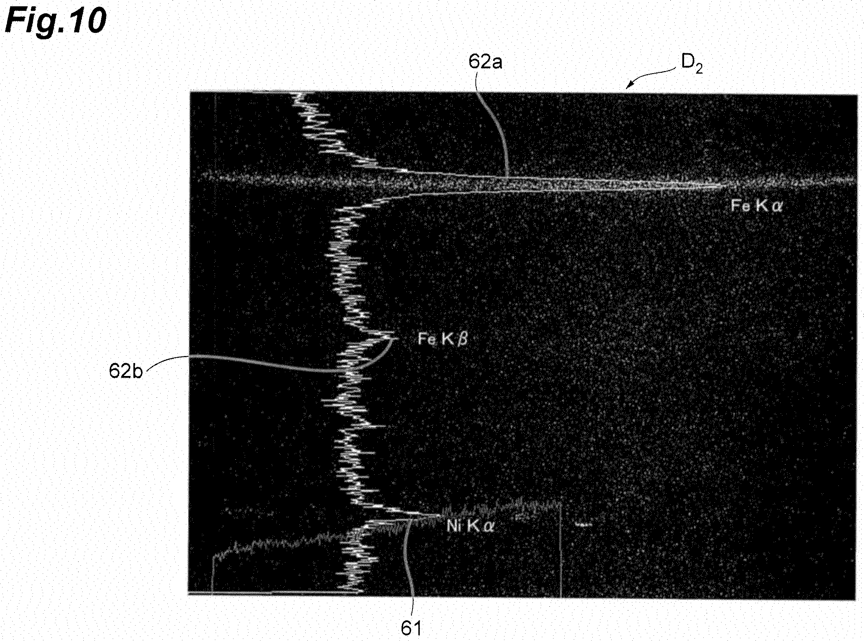

Fig. 8 is a graph illustrating a characteristic X-ray spectrum of stainless steel (SUS) measured by a conventional WDX (Johansson type curved dispersive crystal spectroscope). Seen in this graph are characteristic X-ray peaks indicating the Kα line 61 of Ni, the Kα line 62a and Kβ line 62b of Fe, the Kα line 63a and Kβ line 63b of Cr, and the Kα line 64 of Mn. Fig. 9 and Fig. 10 illustrate the finely-divided image data D₂ (white points indicating positions where the characteristic X-rays are incident) obtained by the X-ray spectrometric detection device 1A of this embodiment and a characteristic X-ray spectrum obtained by integrating the finely-divided image data D₂ for each of a plurality of regions F (see Fig. 6) for the same stainless steel. Fig. 9 illustrates the Kα line 63a and Kβ line 63b of Cr and the Kα line 64 of Mn. Fig. 10 illustrates the Kα line 62a and Kβ line 62b of Fe and the Kα line 61 of Ni. As these graphs illustrate, the X-ray spectrometric detection device 1A of this embodiment can favorably obtain a characteristic X-ray spectrum concerning each element.

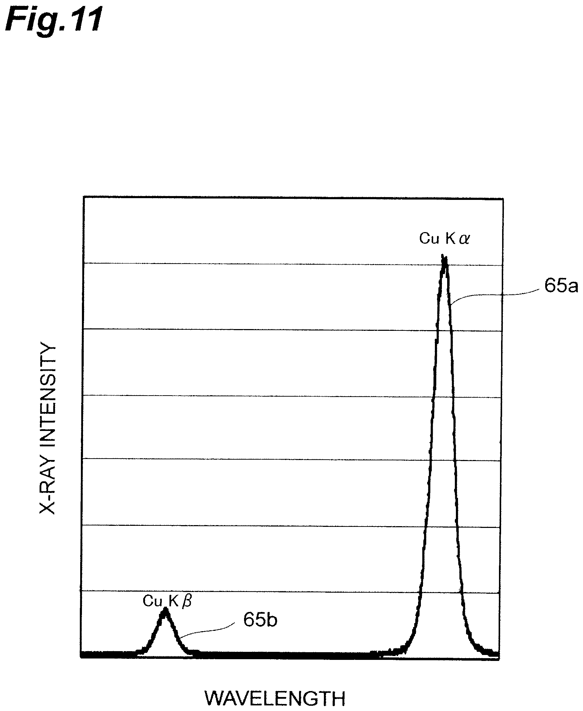

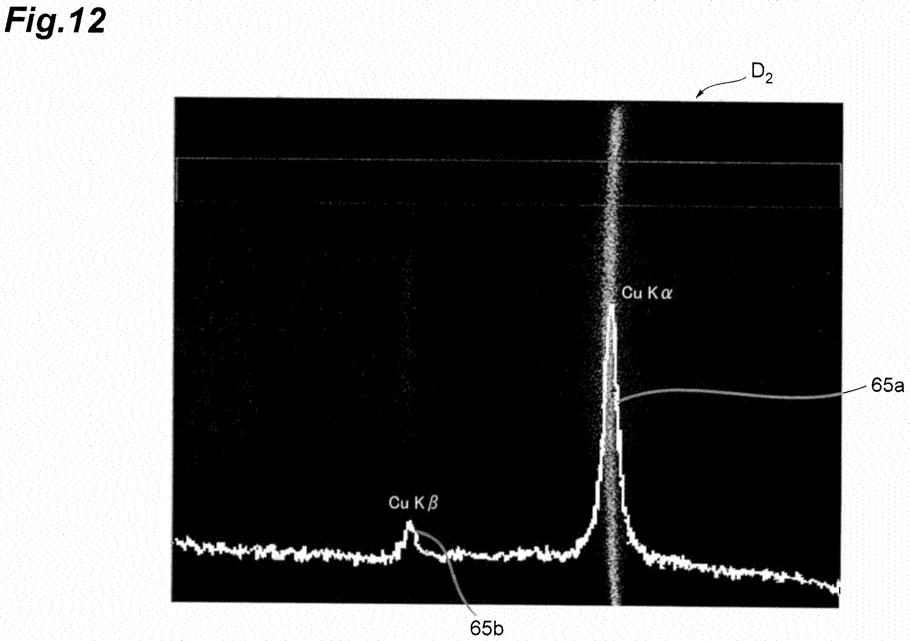

Fig. 11 is a graph illustrating a characteristic X-ray spectrum of pure copper (Cu) measured by the conventional WDX (Johansson type curved dispersive crystal spectroscope). Seen in this graph are characteristic X-ray peaks indicating the Kα line 65a and Kβ line 65b of Cu. Fig. 12 illustrates the finely-divided image data D₂ obtained by the X-ray spectrometric detection device 1A of this embodiment and a characteristic X-ray spectrum obtained by integrating the finely-divided image data D₂ for each of a plurality of regions concerning the same pure copper. Seen in the characteristic X-ray spectrum of Fig. 12 are the Kα line 65a and Kβ line 65b of Cu. The size of the micro analysis spot P at the time of acquiring the finely-divided image data D₂ illustrated in Fig. 12 is a size with a diameter of 100 µm.

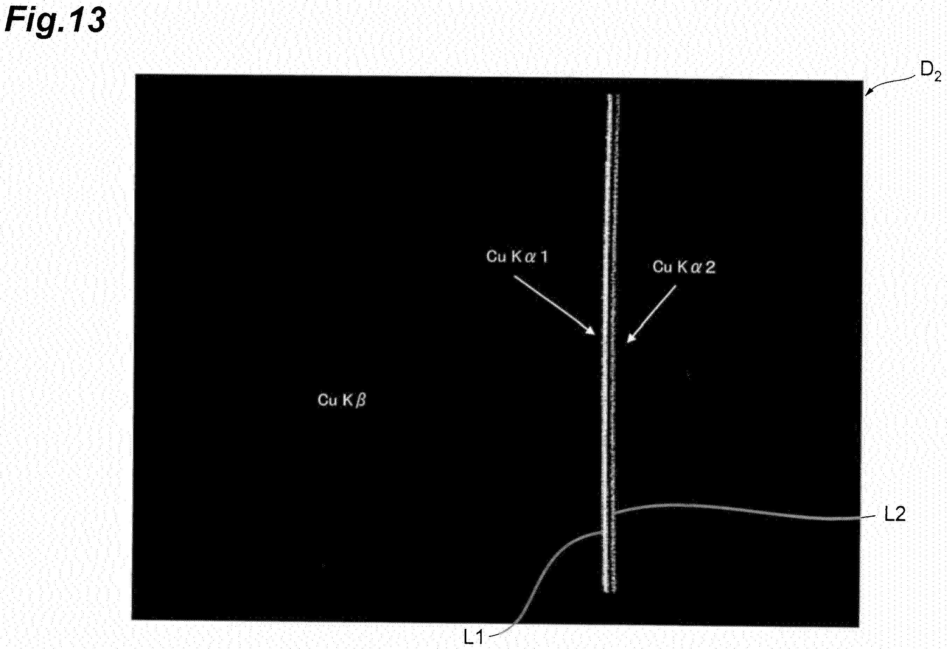

Fig. 13 illustrates the finely-divided image data D₂ concerning Cu when the micro analysis spot P has a diameter of 10 µm in the X-ray spectrometric detection device 1A of this embodiment. Fig. 13 represents data acquired when a part of the light-receiving surface 30a is enlarged by using a function of the two-dimensional X-ray detector 30. In the drawing, a white line L1 indicates the Kα₁ line of Cu, and a white line L2 indicates the Kα₂ line of Cu. As can be seen from this drawing, the line L1 indicating the K α₁ line of Cu and the line L2 indicating the Kα₂ line of Cu are completely separated from each other.

In general, while main purposes of X-ray spectrometry are qualitative and quantitative analyses, other important purposes include state analyses. Orbital electrons of elements constituting a given substance change a little depending on the state where the elements are placed (electronic state such as chemical bonding state). Such a change becomes important information for clarifying the state of elements. The change is generally remarkable in the soft X-ray region as Fig. 21, Fig. 22, Fig. 23, and Fig. 24 illustrate. For detecting such a little change, very accurate, errorless spectral waveform measurement is necessary. By attaining the above-mentioned complete spectrometry, the X-ray spectrometric detection device 1A of this embodiment can capture such a little change in the spectral waveform. Fig. 13 indicates that wavelength components very close to each other such as Kα₁ and Kα₂ lines can clearly be distinguished from each other even in K lines of Cu which do not fall under the soft X-rays. From this fact, it is inferred that the distinction would be more remarkable in the soft X-ray region.

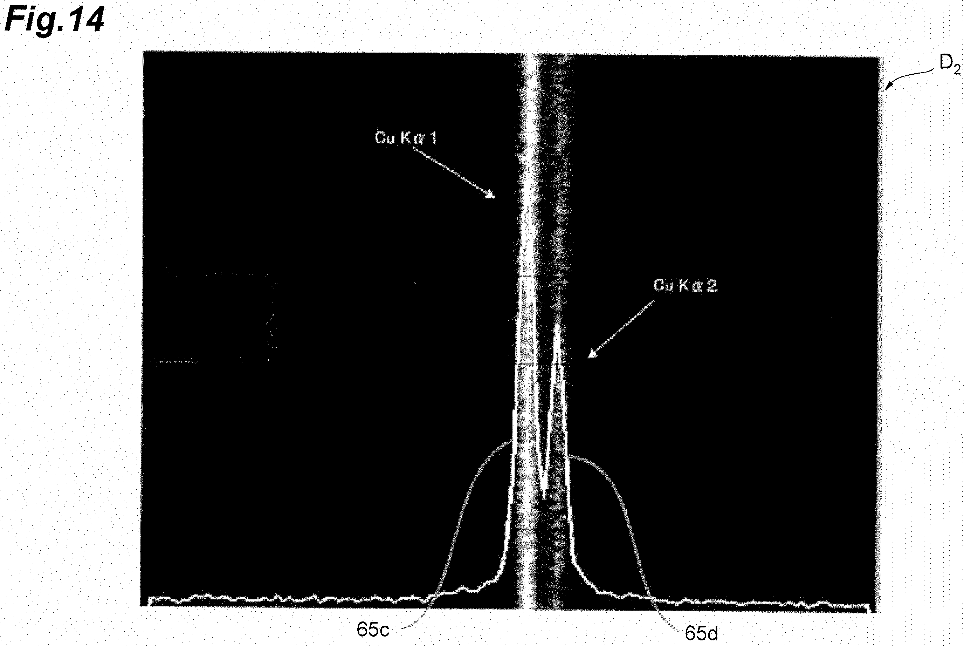

Fig. 14 illustrates a state where a characteristic X-ray spectral waveform of Cu calculated by integrating the finely-divided image data D₂ shown in Fig. 13 is superimposed on the finely-divided image data D₂. This characteristic X-ray spectral waveform, in which the Kα₁ line 65c and Kα₂ line 65d of Cu appear clearly, is seen to have a wavelength resolution which is much improved over the conventional devices.

Wavelength ranges spectrally resolvable by the X-ray spectrometric detection device 1A of this embodiment will now be explained. In the conventional devices such as those of Johann and Johansson types, which change the incident angle of characteristic X-rays by mechanically shifting the angle of a dispersive crystal, a spectrally resolvable wavelength range (i.e., the range in which the incident angle is changeable) is determined by the range in which the angle of the dispersive crystal is changeable. By contrast, the X-ray spectrometric detection device 1A of this embodiment performs measurement while securing the dispersive crystal 20, and utilizes the fact that the X-ray incident angle varies among positions on the diffractive reflection surface 20a, whereby its spectrometric wavelength range is determined by the size of the diffractive reflection surface 20a. The spectrometric wavelength range is also restricted by the size of the two-dimensional X-ray detector 30 receiving the characteristic X-rays diffracted and reflected by the diffractive reflection surface 20a.

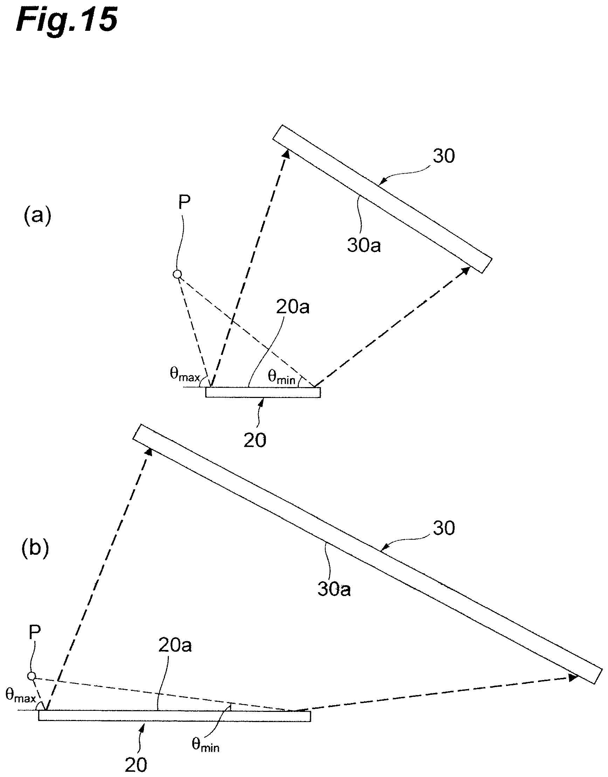

Here, the wavelength range in which spectrometry can be performed by one dispersive crystal 20 is theoretically 0 < λ < 2d from the Bragg reflection condition (nλ = 2dsin(90° - 0)). However, this holds when it is possible to perform measurement within the range of the complementary angle θ of the incident angle from 0° to 90°. Generally, both of the diffractive reflection surface 20a of the dispersive crystal 20 and the light-receiving surface 30a of the two-dimensional X-ray detector 30 have finite sizes, which also restrict the maximum value θmax and the minimum value θmin of the complementary angle θ of the incident angle, as (a) in Fig. 15 illustrates. For further increasing the maximum value θmax of the complementary angle 0 of the incident angle or decreasing the minimum value θmin thereof, it is necessary to place the micro analysis spot P closer to the dispersive crystal 20, and enlarge the diffractive reflection surface 20a of the dispersive crystal 20 and the light-receiving surface 30a of the two-dimensional X-ray detector 30, as (b) in Fig. 15 illustrates.

By way of example, in order for the complementary angle θ of the incident angle to be 15° to 80°, when the dispersive crystal 20 is arranged at 30 mm from the micro analysis spot P, the dispersive crystal 20 having the diffractive reflection surface 20a with a length of 100 mm or more is necessary, and in addition, the two-dimensional X-ray detector 30 having the light-receiving surface 30a with a length of 200 mm or more is necessary. Such sizes incur great difficulty and cost in manufacturing the X-ray spectrometric detection device. It also necessitates a large space about the sample 10. Even if the dispersive crystal 20 is arranged at 15 mm from the micro analysis spot P, the diffractive reflection surface 20a with a length of 55 mm and the light-receiving surface 30a with a length of 150 mm, which are too large, will be necessary. Further, the dispersive crystal 20 arranged at 15 mm from the sample 10 may also interfere with handling of the sample 10, microbeam irradiation mechanisms, and the like.

It is therefore preferred for this embodiment to perform measurement while restricting the complementary angle θ of the incident angle to such a range as 20° to 40°, 30° to 50°, or 50° to 80°, for example. That is, a characteristic X-ray spectrum is preferably obtained in a desirable range narrowed to some extent by such limited complementary angle θ of the incident angle, instead of acquiring a wide range of characteristic X-ray spectrum with a wide range of complementary angle θ of the incident angle such as 15° to 80°. This can attain the X-ray spectrometric detection device 1A practical for manufacture and use.

In an example of sizes of the X-ray spectrometric detection device 1A, using an LiF flat dispersive crystal, the length of the diffractive reflection surface 20a is 30 mm, the distance from the sample 10 to the diffractive reflection surface 20a is 70 mm, and the length of the light-receiving surface 30a is 30 mm. Such a configuration can display the Kα line and the Kβ line of Cr, the Kα line of Mn, and the Kα line of Fe in one set of finely-divided image data D₂ as the above-mentioned Fig. 9 illustrates, and further, can display the Kα line and the Kβ line of Fe and the Kα line of Ni in one set of finely-divided image data D₂ as the above-mentioned Fig. 10 illustrates. It can also display the Kα line and the Kβ line of Cu in one set of finely-divided image data D₂ as the above-mentioned Fig. 12 illustrates.

Further, each of the Kβ line of S (dispersive crystal: PET), the Lα line and the Lβ line of Fe (dispersive crystal: RAP), the OK band (dispersive crystal: RAP), and the CK band (dispersive crystal: PbST) can fully be measured when the length of the diffractive reflection surface 20a is about 30 mm, the range of the complementary angle θ of the incident angle is about 15°, the length of the light-receiving surface 30a is about 30 mm, the distance between the sample 10 and the dispersive crystal 20 is about 50 to 70 mm, and the distance between the dispersive crystal 20 and the light-receiving surface 30a is about 70 to 80 mm. With such sizes, the X-ray spectrometric detection device 1A very practical for manufacture and use can be attained.

The X-ray spectrometric detection device in accordance with the present invention can be modified in various ways, without being restricted to the above-mentioned embodiments and configuration examples.

The X-ray spectrometric detection device in accordance with the present invention is defined in claim 1.

More preferably, in the X-ray spectrometric detection device, the diameter of the micro analysis spot is 50 µm or less. In this case, when a specific wavelength component is diffracted and reflected at a given position on the diffractive reflection surface of the dispersive crystal, the incident angle of characteristic X-rays incident on the position fluctuates less, whereby only a wavelength component corresponding to the incident angle at each position can be selectively diffracted and reflected with higher accuracy.

In the X-ray spectrometric detection device, the lattice spacing of the dispersive crystal is preferably greater than 4 Å, more preferably greater than 50 Å. This makes it possible to spectrally resolve the characteristic X-rays in the soft X-ray region favorably.

Preferably, in the X-ray spectrometric detection device, the dispersive crystal contains at least one material selected from the group consisting of PET, ADP, RAP, TAP, and PbST. This makes it possible to spectrally resolve the characteristic X-rays included in the soft X-ray region favorably.

The X-ray spectrometric detection device further comprises a shield member, arrangeable between the micro analysis spot and the light-receiving surface of the two-dimensional X-ray detector, for blocking the characteristic X-rays from reaching the light-receiving surface directly from the micro analysis spot. This can favorably let the characteristic X-rays diffracted and reflected by the diffractive reflection surface reach the light-receiving surface, and effectively block the characteristic X-rays from reaching the light-receiving surface directly from the micro analysis spot, thereby making it possible to improve the S/N ratio in the two-dimensional X-ray detector.

Letting a first position be a position where the characteristic X-ray having the smallest incident angle to the surface of the dispersive crystal, in the characteristic X-rays reaching the light-receiving surface via the dispersive crystal from the micro analysis spot, is diffracted and reflected on the surface of the dispersive crystal, a second position be a position where the characteristic X-ray diffracted and reflected at the first position reaches the light-receiving surface, a third position be a position where the characteristic X-ray having the largest incident angle to the surface of the dispersive crystal is diffracted and reflected on the surface of the dispersive crystal, a fourth position be a position where the characteristic X-ray diffracted and reflected at the third position reaches the light-receiving surface, it is preferred for an end edge on the dispersive crystal side of the shield member to be located within a space defined by a first boundary passing the micro analysis spot and the third position, a second boundary passing the micro analysis spot and the fourth position, and a third boundary passing the first position and the second position. This can effectively block the characteristic X-rays from reaching the light-receiving surface directly from the micro analysis spot.

Preferably, the X-ray spectrometric detection devices further comprise an arithmetic processing unit for integrating the data output from the two-dimensional X-ray detector for each of a plurality of regions aligning in a predetermined direction.

Preferably, in the X-ray spectrometric detection devices, each of the plurality of regions is a line-shaped region.

Preferably, in the X-ray spectrometric detection devices, the arithmetic processing unit integrates the data while multiplying it by a weight corresponding to a detection position within the region.

### Industrial Applicability

The present invention can be utilized as an X-ray spectrometric detection device which can reduce the measurement time and attain complete spectrometry in a simple configuration.

### Reference Signs List

1A - X-ray spectrometric detection device, 2 - characteristic X-ray, 2a to 2c - wavelength component, 2d, 2e - characteristic X-ray, 10 - sample, 20 - dispersive crystal, 20a - diffractive reflection surface, 30 - two-dimensional X-ray detector, 30a - light-receiving surface, 31 - photoelectric conversion unit, 32 - electron multiplier unit, 33 - fluorescent screen, 34 - photodetector unit, 35 - arithmetic unit, 40 - arithmetic processing unit, 50 - shield member, D₁ - two-dimensional data, D₂ - finely-divided image data, P - micro analysis spot.

## Claims

1. An X-ray spectrometric detection device for spectrally resolving characteristic X-rays (2) included in a soft X-ray region emitted from a micro analysis spot (P) having a diameter of 100 µm or less on a sample surface irradiated with X-rays or an electron beam and detecting the resolved characteristic X-rays by wavelength, the device comprising:
a dispersive crystal (20) having a flat diffractive reflection surface (20a) for receiving the characteristic X-rays (2) emitted from the micro analysis spot (P), and being adapted to diffract and reflect a wavelength component corresponding to an incident angle to the diffractive reflection surface (20a) in wavelength components included in the characteristic X-rays (2), so as to spectrally resolve the characteristic X-rays (2) by wavelength;
a two-dimensional X-ray detector (30) having a light-receiving surface (30a) for receiving the characteristic X-rays (2) diffracted and reflected by the dispersive crystal (20), and being adapted to generate data concerning an incident position and intensity of the characteristic X-rays (2) incident on the light-receiving surface (30a); and
**characterized by**
a shield member (50), arrangeable between the micro analysis spot and the light-receiving surface of the two-dimensional X-ray detector, such that it blocks the characteristic X-rays from reaching the light-receiving surface directly from the micro analysis spot.

2. The X-ray spectrometric detection device according to Claim 1, wherein the diameter of the micro analysis spot (P) is 50 µm or less.

3. The X-ray spectrometric detection device according to Claim 1 or 2, wherein the dispersive crystal (20) has a lattice spacing greater than 4 Å.

4. The X-ray spectrometric detection device according to Claim 1 or 2, wherein the dispersive crystal (20) has a lattice spacing greater than 50 Å.

5. The X-ray spectrometric detection device according to any one of Claims 1 to 4, wherein the dispersive crystal (20) contains at least one material selected from the group consisting of PET, ADP, RAP, TAP, and PbST.

6. The X-ray spectrometric detection device according to Claim 1, wherein, letting a first position be a position where the characteristic X-ray having the smallest incident angle to the surface of the dispersive crystal (20), in the characteristic X-rays reaching the light-receiving surface (30a) via the dispersive crystal (20) from the micro analysis spot (P), is diffracted and reflected on the surface of the dispersive crystal (20), a second position be a position where the characteristic X-ray diffracted and reflected at the first position reaches the light-receiving surface (30a), a third position be a position where the characteristic X-ray having the largest incident angle to the surface of the dispersive crystal (20) is diffracted and reflected on the surface of the dispersive crystal (20), a fourth position be a position where the characteristic X-ray diffracted and reflected at the third position reaches the light-receiving surface (30a), an end edge on the dispersive crystal side of the shield member (50) is located within a space defined by a first boundary passing the micro analysis spot (P) and the third position, a second boundary passing the micro analysis spot (P) and the fourth position, and a third boundary passing the first position and the second position.

7. The X-ray spectrometric detection device according to any one of Claims 1 to 6, further comprising an arithmetic processing unit (40) integrating the data output from the two-dimensional X-ray detector (30) for each of a plurality of regions aligning in a predetermined direction.

8. The X-ray spectrometric detection device according to Claim 7, wherein each of the plurality of regions is a line-shaped region.

9. The X-ray spectrometric detection device according to Claim 7 or 8, wherein the arithmetic processing unit (40) integrates the data while multiplying the data by a weight corresponding to a detection position within the region.

## Patentansprüche

1. Röntgenstrahlspektrometrie-Erfassungsvorrichtung zum spektralen Auflösen von charakteristischen Röntgenstrahlen (2) in einem weichen Röntgenbereich, der von einem Mikroanalysepunkt (P) mit einem Durchmesser von 100 µm oder weniger auf einer mit Röntgen-strahlen oder einem Elektronenstrahl bestrahlten Probenfläche emittiert wird, und zum Erfassen der aufgelösten charakteristischen Röntgenstrahlen anhand der Wellenlänge, wobei die Vorrichtung umfasst:
einen dispersiven Kristall (20), der eine flache diffraktive Reflexionsfläche (20a) zum Empfangen der charakteristischen Röntgenstrahlen (2), die von dem Mikroanalysepunkt (P) emittiert werden, aufweist und ausgebildet ist, um eine Wellenlängenkomponente in Entsprechung zu dem Einfallswinkel an der diffraktiven Reflexionsfläche (20a) zu in den charakteristischen Röntgenstrahlen (2) enthaltenen Wellenlängenkomponenten zu beugen und zu reflektieren, um die charakteristischen Röntgenstrahlen (2) anhand ihrer Wellenlänge spektral aufzulösen,
einen zweidimensionalen Röntgenstrahldetektor (30), der eine Lichtempfangsfläche (30a) zum Empfangen der charakteristischen Röntgenstrahlen (2), die durch den dispersiven Kristall (20) gebeugt und reflektiert wurden, aufweist und ausgebildet ist, um Daten zu der Einfallsposition und Intensität der auf die Lichtempfangsfläche (30a) einfallenden charakteristischen Röntgenstrahlen (2) zu erzeugen,
**gekennzeichnet durch:**
ein Abschirmungsglied (50), das zwischen dem Mikroanalysepunkt und der Lichtempfangsfläche des zweidimensionalen Röntgenstrahldetektors angeordnet werden kann, wodurch es verhindert, dass die charakteristischen Röntgenstrahlen die Lichtempfangsfläche direkt von dem Mikroanalysepunkt erreichen.

2. Röntgenstrahlspektrometrie-Erfassungsvorrichtung nach Anspruch 1, wobei der Durchmesser des Mikroanalysepunkts (P) 50 µm oder weniger beträgt.

3. Röntgenstrahlspektrometrie-Erfassungsvorrichtung nach Anspruch 1 oder 2, wobei der dispersive Kristall (20) einen Gitterabstand größer als 4 Å aufweist.

4. Röntgenstrahlspektrometrie-Erfassungsvorrichtung nach Anspruch 1 oder 2, wobei der dispersive Kristall (20) einen Gitterabstand größer als 50 Å aufweist.

5. Röntgenstrahlspektrometrie-Erfassungsvorrichtung nach einem der Ansprüche 1 bis 4, wobei der dispersive Kristall (20) wenigstens ein Material enthält, das aus der Gruppe ausgewählt ist, die PET, ADP, RAP, TAP und PbST umfasst.

6. Röntgenstrahlspektrometrie-Erfassungsvorrichtung nach Anspruch 1, wobei, wenn eine erste Position eine Position ist, an welcher der charakteristische Röntgenstrahl mit dem kleinsten Einfallswinkel an der Oberfläche des dispersiven Kristalls (20) innerhalb der die Lichtempfangsfläche (30a) über den dispersiven Kristall (20) von dem Mikroanalysepunkt (P) erreichenden charakteristischen Röntgenstrahlen an der Oberfläche des dispersiven Kristalls (20) gebeugt und reflektiert wird, wenn eine zweite Position eine Position ist, an welcher der an der ersten Position gebeugte und reflektierte charakteristische Röntgenstrahl die Lichtempfangsfläche (30a) erreicht, wenn eine dritte Position eine Position ist, an welcher der charakteristische Röntgenstrahl mit dem größten Einfallswinkel an der Oberfläche des dispersiven Kristalls (20) an der Oberfläche des dispersiven Kristalls (20) gebeugt und reflektiert wird, und wenn eine vierte Position eine Position ist, an welcher der an der dritten Position gebeugte und reflektierte charakteristische Röntgenstrahl die Lichtempfangsfläche (30a) erreicht, eine Endkante des Abschirmungsglieds (50) auf der Seite des dispersiven Kristalls in einem Raum angeordnet ist, der durch eine sich durch den Mikroanalysepunkt (P) und die dritte Position erstreckende erste Grenze, eine sich durch den Mikroanalysepunkt (P) und die vierte Position erstreckende zweite Grenze und eine sich durch die erste Position und die zweite Position erstreckende dritte Grenze definiert wird.

7. Röntgenstrahlspektrometrie-Erfassungsvorrichtung nach einem der Ansprüche 1 bis 6, die weiterhin eine Arithmetikverarbeitungseinheit (40) umfasst, die die von dem zweidimensionalen Röntgenstrahldetektor (30) ausgegebenen Daten für jeden aus einer Vielzahl von in einer vorbestimmten Richtung ausgerichteten Bereichen integriert.

8. Röntgenstrahlspektrometrie-Erfassungsvorrichtung nach Anspruch 7, wobei jeder aus der Vielzahl von Bereichen ein linienförmiger Bereich ist.

9. Röntgenstrahlspektrometrie-Erfassungsvorrichtung nach Anspruch 7 oder 8, wobei die Arithmetikverarbeitungseinheit (40) die Daten integriert, während sie die Daten mit einem Gewicht in Entsprechung zu einer Erfassungsposition in dem Bereich multipliziert.

## Revendications

1. Dispositif de détection spectrométrique à rayons X destiné à la résolution spectrale de rayons X (2) caractéristiques inclus dans une zone de rayons X mous, émis à partir d'un point de micro analyse (P) présentant un diamètre de 100 µm ou moins sur une surface échantillon irradiée par des rayons X. ou un faisceau d'électrons, et pour détecter les rayons X caractéristiques séparés par longueurs d'onde, le dispositif comprenant :
un cristal dispersif (20) comportant une surface plate de réflexion par diffraction (20a) destinée à recevoir les rayons X caractéristiques (2) émis à partir du point de micro analyse (P), et conçu pour diffracter et réfléchir une composante de longueur d'onde correspondant à un angle incident par rapport à la surface de réflexion par diffraction (20a) en composantes de longueur d'onde incluses dans les rayons X caractéristiques (2) de façon à séparer de manière spectrale les rayons X caractéristiques (2) par longueurs d'onde,
un détecteur de rayons X (30) bidimensionnel comportant une surface de réception de la lumière (30a) destinée à recevoir les rayons X caractéristiques (2) diffractés et réfléchis par le cristal dispersif (20), et conçu pour générer des données concernant la position incidente et l'intensité des rayons X caractéristiques (2) incidents sur la surface de réception de lumière (30a), et
**caractérisé par**
un élément de blindage (50) pouvant être agencé entre le point de micro analyse et la surface de réception du détecteur à rayons X bidimensionnel de sorte à ce qu'il empêche les rayons X caractéristiques d'atteindre directement la surface de réception de la lumière à partir du point de micro analyse.

2. Dispositif de détection spectrométrique à rayons X selon la revendication 1, dans lequel le diamètre du point de micro analyse (P) est de 50 µm ou moins.

3. Dispositif de détection spectrométrique à rayons X selon la revendication 1 ou la revendication 2, dans lequel le cristal dispersif (20) présente un pas de réseau supérieur à 4 Å.

4. Dispositif de détection spectrométrique à rayons X selon la revendication 1 ou la revendication 2, dans lequel le cristal dispersif (20) présente un pas de réseau supérieur à 50 Å.

5. Dispositif de détection spectrométrique à rayons X selon l'une quelconque des revendications 1 à 4, dans lequel le cristal dispersif (20) contient au moins un matériau sélectionné à partir du groupe constitué de PET, ADP, RAP, TAP et PbST.

6. Dispositif de détection spectrométrique à rayons X selon la revendication 1, dans lequel, si l'on considère une première position comme étant la position ou le rayon X caractéristique, présentant l'angle d'incidence le plus petit par rapport à la surface du cristal dispersif (20) dans les rayons X caractéristiques atteignant la surface de réception de lumière (30a) au travers du cristal dispersif (20) à partir du point de micro analyse (P), est diffracté et réfléchi sur la surface du cristal dispersif (20), une deuxième position comme étant la position où le rayon X caractéristique diffracté et réfléchi au niveau de la première position atteint la surface de réception de lumière (30a), une troisième position comme étant la position où le rayon X caractéristique, présentant l'angle d'incidence le plus grand par rapport à la surface du cristal dispersif (20), est diffracté et réfléchi sur la surface du cristal dispersif (20), une quatrième position comme étant la position où le rayon X caractéristique diffracté et réfléchi au niveau de la troisième position atteint la surface de réception de lumière (30a), le bord terminal du côté du cristal dispersif de l'élément de blindage (50) est situé à l'intérieur d'un espace défini par une première limite passant le point de micro analyse (P) et la troisième position, une deuxième limite passant le point de micro analyse (P) et la quatrième position et une troisième limite passant la première position et la deuxième position.

7. Dispositif de détection spectrométrique à rayons X selon l'une quelconque des revendications 1 à 6, comprenant en outre une unité de traitement arithmétique (40) intégrant les données délivrées par le détecteur à rayons X (30) bidimensionnel pour chacune d'une pluralité de zones alignées dans une direction prédéterminée.

8. Dispositif de détection spectrométrique à rayons X selon la revendication 7, dans lequel chacune de la pluralité de zones est une zone linéaire.

9. Dispositif de détection spectrométrique à rayons X selon la revendication 7 ou la revendication 8, dans lequel l'unité de traitement arithmétique (40) intègre les données tout en multipliant les données par un poids correspondant à une position de détection à l'intérieur de la zone.
